# EUROPEAN PATENT SPECIFICATION

(11) **EP 3 317 551 B1**
(45) Date of publication and mention of the grant of the patent: **09.06.2021**
(21) Application number: 16745524.5
(22) Date of filing: 30.06.2016
(51) Int. Cl.: F16B 31/02, F16B 35/06

(54) **TIGHTENING SCREW HAVING TORQUE LIMITING CAP**
SPANNSCHRAUBE MIT DREHMOMENTBEGRENZENDER KAPPE
VIS DE SERRAGE AYANT UN CAPUCHON DE LIMITATION DE COUPLE

(30) Priority: 02.07.2015 NL 2015076
(43) Date of publication of application: 09.05.2018
(73) Proprietor: J. van Walraven Holding B.V., 3641 RK Mijdrecht (NL)
(72) Inventor: JUZAK, Marek, 3641 ZS Mijdrecht (NL); NIJDAM, Frank, 3893 BA Zeewolde (NL)
(74) Representative: EP&C
(86) International application number: PCT/NL2016/050461
(87) International publication number: WO 2017/003285

(56) References cited:
- WO-A2-2014/066847
- FR-A1- 2 928 429
- US-A- 3 709 087
- US-A- 5 017 068

## Description

The invention relates to a tightening screw having a screw head and a screw shank, said screw shank being provided with a male thread adapted to cooperate with a female fastening means, wherein a torque limiting cap is arranged on the screw head, said torque limiting cap including at least one torque transferring feature that couples the cap to the screw head in a rotational direction.

Such tightening screws are known in the art. For example EP 2 584 241 A1 discloses a torque limiting cap on a tightening screw for a hose clamp, which prevents excessive tightening of the hose clamp around the hose.

FR 2 928 429 A1, WO 2017/066847 A2 and US 3 709 087 A each disclose torque limiters wherein use is made of a ratchet mechanism. US 5 017 068 A discloses a plastic accessory that can be placed on the head of different types of screws.

The invention has for an object to provide an improved tightening screw that removes or at least mitigates the problem of an excessive tightening of the screw.

This object is achieved by a tightening screw of the type described at the outset, wherein according to one aspect the torque limiting cap is made of plastic, wherein the torque transferring feature includes a recess in the head and a protrusion on the cap that mates with the recess such that a torque can be transferred from the torque limiting cap to the screw head, and in that the torque limiting cap has on an outer side a recess which is able to mate with a screw driver, wherein the torque limiting cap is adapted to be destructed at the recess by the screw driver when the torque applied by a screw driver to the cap exceeds a predetermined value so as to limit the torque to be applied to the screw.

The choice of the specific plastic material used influences the maximum torque that the cap can transfer to the screw before the recess that mates with the screw driver is destructed. The selection of a specific plastic material may advantageously be used to provide different caps with the same design for the same screw, but with a different torque limit. Accordingly, the invention according to this aspect also relates to a method according to claim 8.

In a practical embodiment the recess in the screw head may be a socket, preferably a hexagonal socket (hex socket). The socket, and in particular the hex socket can receive a mating tool tip, which is a common tool tip shape. Thus when the screw for some reason has to be untightened or released, the torque limiting cap can be removed and the socket in the screw head can be used to unscrew the tightening screw.

In a practical embodiment the recess in the cap has a cruciform shape. This has the advantage that the screw can be tightened with the most common cruciform screw driver heads.

In a possible embodiment the torque limiting cap comprises a dome that receives the screw head. The dome covers the screw head and prevents that the screw head is directly engaged with a tool or otherwise, whereby the torque limiting function might be circumvented.

In a further embodiment the cap comprises an extension part on top of the dome, wherein the recess, which is able to mate with the screw driver, is arranged in said extension part.

The peripheral surface of the extension part may have a cylindrical shape or a hexagonal shape. In particular the hexagonal outer shape of the extension part provides the option to tighten the combination screw/torque limiting cap by means of a spanner, wrench or other suitable tool. Obviously in that case the recess in the extension part is not used and will not be destroyed when a certain torque limit is exceeded. Advantageously the cap is designed such that the protrusion located on the inner side of the cap and mating with the socket in the screw head is destroyed when a certain torque limit is exceeded. The torque limit determined by the recess in the extension part and the torque limit determined by the protrusion on the inner side of the cap may be different, in particular the latter will be higher than the former. To provide this option, a hexagonal shape of the protrusion and the socket is advantageous.

Another aspect of the disclosure relates to a tightening screw of the type described at the outset, wherein the torque limiting cap is retained on the screw head in the axial direction of the screw and wherein the torque transferring feature comprises a ratchet mechanism which allows rotation of the cap relative to the screw head in a tightening direction if the torque applied to the cap exceeds a predetermined threshold value and blocks rotation relative to the screw head in an opposite direction. This aspect of the disclosure is not covered by the claims.

Preferably this torque limiting cap is made of metal, preferably spring steel. Advantageously in this embodiment the torque limiting cap is not destroyed when the torque limit is exceeded. The tightening screw with the torque limiting cap can be used and re-used if for some reason the screw has been untightened or released and has to be tightened again.

In a more specific embodiment the screw head has a peripheral surface, a shaft-sided surface and a top surface opposite the shaft sided surface, wherein the torque limiting cap comprises a top plate that is located at the side of the top surface of the screw head and is provided with a cut-out or recess which is able to mate with a screw driver, and retaining arms that run from the top plate along the peripheral surface of the screw head towards the shaft sided surface, said retaining arms having a hook end that grips behind the edge between the peripheral surface and the shaft sided surface of the screw head, and wherein ramp shaped lugs are formed on the peripheral surface of the head, wherein the ramp shaped lugs and the retaining arms form part of said ratchet mechanism, wherein the retaining arms are able to run onto and beyond the ramp shaped lugs in a tightening direction when a predetermined torque is applied to the torque limiting cap and wherein the retaining arms are blocked by the ramp shaped lugs in an untightening direction.

In a further practical embodiment the screw head is a polygonal head, preferably a hexagonal head, and the ramp shaped lugs are located adjacent the axially extending edges of the polygonal head.

In a possible further embodiment the screw head has a blind central hole in a top surface, wherein the cut-out or recess in the top plate of the torque limiting cap is aligned with said blind central hole in the screw head.

Yet another aspect of the disclosure relates to a tightening screw of the type described at the outset, wherein the torque limiting cap is retained on the screw head in the axial direction of the screw and in the direction of rotation, wherein the torque limiting cap has a base plate that is arranged on a top side of the screw head, and wings extending from the peripheral edge and are folded over such that they have end portions that extend substantially parallel to the base plate, wherein the peripheral edges of the end portions of the folded wings are spaced apart in such a way that essentially cross wise slots are formed adapted to mate with a screw driver, and wherein the folded wings are adapted and arranged to be deformed by the screw driver when the torque applied by the screw driver to the cap exceeds a predetermined value, such that the screw driver shifts out of the slot(s), so as to limit the torque to be applied to the screw. This aspect of the disclosure is not covered by the claims.

This torque limiting cap is preferably formed from sheet metal, in particular from a spring steel sheet.

Advantageously in this embodiment of the tightening screw, the torque limiting cap is not destroyed when the torque limit is exceeded. The tightening screw with the torque limiting cap can be used and re-used if for some reason the screw has been released and has to be tightened again.

In a practical embodiment the torque limiting cap may be fixed to the screw head by welding or a screw connection.

In a possible further embodiment the cap has retaining arms that extend from the base plate to an opposite side as the folded wings extend to, which arms extend along the peripheral surface of the screw head, said arms being connected to the screw head, e.g. by welding or screwing. In particular the screw head may be cylindrical and provided with a male thread and the arms may be formed as cylinder sections which on their inner side are provided with a female thread able to cooperate with said male thread.

The invention will be described in more detail in the following description with reference to the drawing, in which:
Fig. 1 shows a cross sectional view of a pipe clip including a tightening screw according to the invention,
Fig. 2 shows a view in perspective of a possible embodiment of tightening according to the invention,
Fig. 3 shows a view in perspective of the tightening screw of Fig. 2 without the torque limiting cap,
Fig. 4 shows a view in perspective of the torque limiting cap of the tightening screw of Fig. 2,
Fig. 5 shows another view in perspective of the torque limiting cap of Fig. 4
Fig. 6 shows a view in perspective of an alternative embodiment of the tightening screw of Fig. 2,
Fig. 7 shows a view in perspective of the torque limiting cap of the tightening screw of Fig. 6,
Fig. 8 shows a view in perspective of another possible embodiment of a tightening screw with a torque limiting cap according to the disclosure,
Fig. 9 shows a view in perspective of the torque limiting cap of the tightening screw of Fig. 8,
Fig. 10 shows a view in perspective of the tightening screw of Fig. 8 without the torque limiting cap,
Fig. 11 shows a view in perspective of yet another possible embodiment of tightening screw with a torque limiting cap according to the disclosure,
Fig. 12 shows a view in perspective of the torque limiting cap of the tightening screw of Fig. 11, and
Fig. 13 shows a view in perspective of the tightening screw of Fig. 11 without the torque limiting cap.

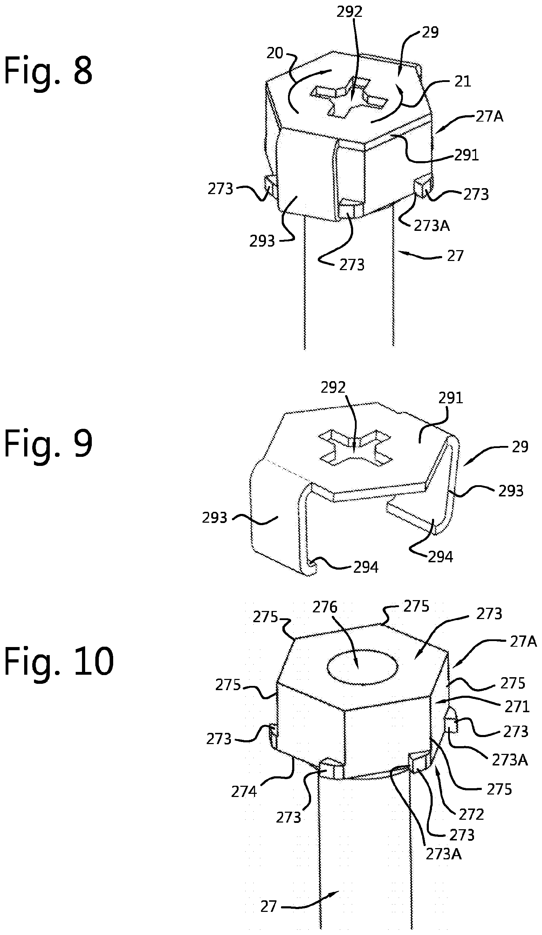

Examples according to Figures 8 to 13 do not fall under the scope of claim 1.

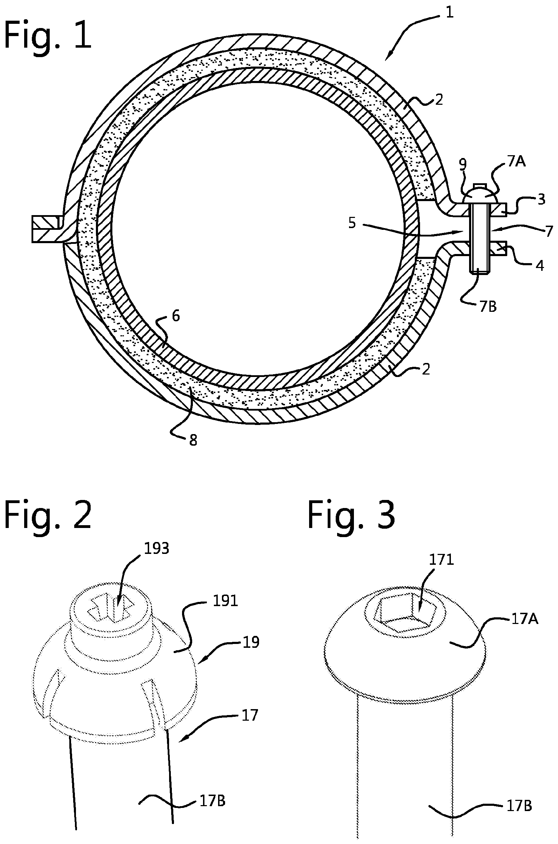

By way of example Fig. 1 shows a pipe clip 1 comprising a metal annular clip body 2. The pipe clip 1 has a vibration insulating lining 8 provided on the inner side of the annular clip body 2.

In the particular example of Fig. 1 the clip body 2 has on one side two opposing radial flanges 3, 4 defining an opening 5 adapted to arrange the pipe clip body 2 around a pipe 6. It is possible that the clip body has opposing flanges on both sides which can be tightened together, but this is not essential to the invention.

The pipe clip body 2 has at the radial flange 4 a female fastening means, in this case formed as a threaded hole in the flange 4. The pipe clip 1 comprises a tightening screw 7 having a screw head 7A and a screw shank 7**B.** The screw shank 7B is provided with a male thread adapted to cooperate with the female thread of the hole in the flange 4. The screw head 7A engages the other radial flange 3 so as to tighten the flanges 3, 4 towards each other and tighten the pipe clip 1 around the pipe 6.

A torque limiting cap 9 is arranged on the screw head 7A of the tightening screw 7. In the following, different tightening screws are described which will be indicated by reference numerals 17, 27 and 37 respectively and the corresponding caps are indicated by reference numerals 19, 29, 39 respectively.

In Figs. 2 - 5 is illustrated an embodiment of a tightening screw 17 with a torque limiting cap 19 made of plastic.

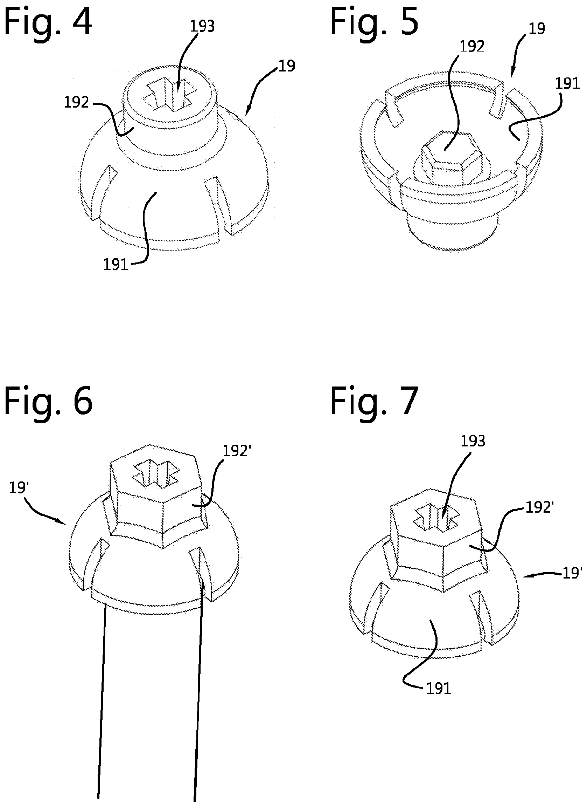

The torque limiting cap 19 comprises a dome 191 that is positioned over the screw head 17A. The screw head 17A has a recess formed as a socket, in particular a hex socket 171. On an inner side of the cap, i.e. the concave side of the dome 191 a torque transferring protrusion 192 is formed (cf. Fig. 5) that mates with a socket 171 in the screw head 17A. The protrusion 192 has a hexagonal shape. The protrusion 192 mating with the socket 171 forms a torque transferring feature that couples the cap 19 to the screw head 17A in a rotational direction of the screw.

The cap 19 has on an outer side, i.e. the convex side of the dome 191, an extension part 192 on top of the dome 191. A recess 193 which is able to mate with a screw driver is formed in the extension part 192. In the example shown the recess has a cruciform shape as can be seen in Figs 2 and 4. The peripheral surface of the extension part 192 has a cylindrical shape as can be seen in Figs 2 and 4.

The plastic cap 19 is formed such that it is destructed at the recess 193 by the screw driver when the torque applied by a screw driver to the cap 19 exceeds a predetermined value so as to limit the torque to be applied to the screw 17.

In Fig. 6 and 7 a similar screw 17 is shown provided with an alternative cap 19'. The only difference with the previous cap 19 is the outer contour of the extension part 192' which is polygonal, in this particular example hexagonal. The other features are the same as the cap 19 shown in Figs 2- 5 and are indicated with the same reference numerals.

In particular the hexagonal outer shape of the extension part 192' provides the option to tighten the combination of the screw 17 and the torque limiting cap 19' by means of a spanner, wrench or other suitable tool. Obviously in that case the recess in the extension part is not used and will not be destroyed when a certain torque limit is exceeded. Advantageously the cap 19' is designed such that the protrusion 192 located on the inner side of the cap 19' and mating with the socket 171 in the screw head 17A is destroyed when a certain torque limit is exceeded. The torque limit determined by the recess 193 in the extension part 192' will be lower than the torque limit determined by the protrusion 192 on the inner side of the cap.

In Fig. 8 - 10 is shown a different embodiment of a tightening screw 27 with torque limiting cap 29.

In this particular embodiment the torque limiting cap 29 is retained on the screw head 27A in the axial direction of the screw 27 and is coupled in a direction of rotation to the screw head 27A by a ratchet mechanism which allows rotation of the cap 29 relative to the screw head 27A in a tightening direction 20 if the torque applied to the cap exceeds a predetermined threshold value and blocks rotation relative to the screw head 27A in an opposite direction 21.

The torque limiting cap 29 in this embodiment is made of metal, preferably spring steel.

The screw head 27A has a peripheral surface 271, a shaft sided surface 272 and a top surface 273 opposite the shaft sided surface 272. The torque limiting cap 29 comprises a top plate 291 that is located at the side of the top surface 273 of the screw head 27 and is provided with a cut-out 292 which is able to mate with a screw driver. The cut-out has a cruciform shape in this example. The cap 29 has retaining arms 293 that run from the top plate 291 along the peripheral surface 271 of the screw head 27A towards the shaft sided surface 272. In this example the cap has two radially opposing retaining arms, but the cap could have more retaining arms. The retaining arms 293 each have a hook end 294 that grips behind the edge 274 between the peripheral surface 271 and the shaft sided surface 272 of the screw head 27A.

Ramp shaped lugs 273 are formed on the peripheral surface of the screw head 27A. The ramp shaped lugs 273 and the retaining arms 293 form part of the mentioned ratchet mechanism wherein the retaining arms 293 are able to run onto and beyond the ramp shaped lugs 273 in a tightening direction (indicated by arrow 20 in Fig. 8) when a predetermined torque is applied to the torque limiting cap 29. The retaining arms 293 are blocked by a stop surface 273A of the ramp shaped lugs 273 in an untightening direction (indicated by arrow 21 in Fig. 8).

The screw head 27A is a polygonal head, in this particular example a hexagonal head. The ramp shaped lugs 273 are located adjacent axially extending edges 275 of the polygonal head 27A.

The screw head 27A has a blind central hole 276 in the top surface 273. The cut-out 292 in the top plate 291 of the torque limiting cap 29 is aligned with said blind central hole 276 in the screw head 27A. This allows that a screw driver tip can be inserted far enough in the cut-out such that the engagement is not the limiting factor on what torque can be applied to the cap 29 and the head 27A.

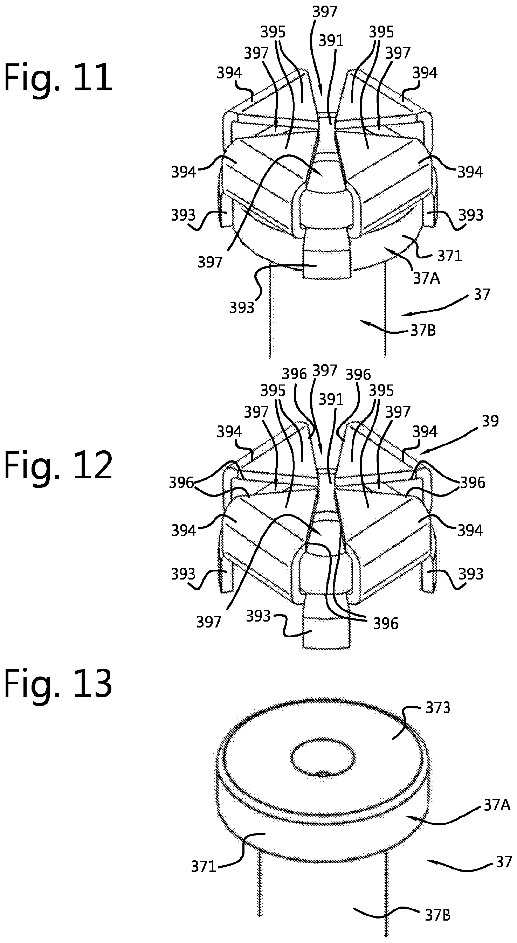

In Fig. 11 - 13 is shown yet another different embodiment of a tightening screw 37 with torque limiting cap 39. The screw 37 has a head 37A and a shaft 37B.

Preferably the torque limiting cap 39 is formed from sheet metal, in particular from a spring steel sheet.

The torque limiting cap 39 in this embodiment is retained on the screw head 37A in the axial direction of the screw 37 and in the direction of rotation. The torque limiting cap 39 has a base plate 391 that is arranged on a top side 373 of the screw head 37. The cap 39 has wings 394 extending from the peripheral edge of the base plate 391 and are folded over such that they have end portions 395 that extend substantially parallel to the base plate 391. The peripheral edges 396 of the end portions of the folded wings 394 are spaced apart in such a way that essentially crosswise slots 397 are formed adapted to mate with a screw driver. The folded wings 394 are adapted and arranged to be deformed by the screw driver when the torque applied by the screw driver to the cap 39 exceeds a predetermined value, such that the screw driver shifts out of the slot(s) 397, so as to limit the torque to be applied to the screw 37.

The cap 39 has arms 393 that extend from the base plate 391 to an opposite side as the folded wings 394 extend to. The arms 393 extend along a peripheral surface 371 of the screw head 37A. The arms 393 are connected to the screw head 37A. The arms 393 may for example be welded to the screw head 37A. Alternatively, the peripheral surface 371 of the screw head may be threaded, and the arms 393 may be provided with female thread sections able to cooperate with the male thread on the peripheral surface 371. Thereby the cap 39 can be screwed onto the screw head 37A.

## Claims

1. Metal tightening screw (7; 17) having a screw head (7A; 17A) and a screw shank (7B, 17B), said screw shank (7B; 17B) being provided with a male thread adapted to cooperate with a female fastening means, wherein a torque limiting cap (9; 19; 19') is arranged on the screw head (7A; 17A), said torque limiting cap (9; 19; 19')including at least one torque transferring feature that couples the cap (9; 19; 19') to the screw head (7A; 17A) in a rotational direction, **characterized in that**
the torque limiting cap (9; 19; 19') is made of plastic, wherein the torque transferring feature includes a recess (171) in the head (7A; 17A) of the screw and a protrusion (192) on the cap (9; 19; 19') that mates with the recess (171) such that a torque can be transferred from the torque limiting cap (9; 19; 19') to the screw head (7A; 17A), and **in that** the torque limiting cap (9; 19; 19') has on an outer side a recess (193) which is able to mate with a screw driver, wherein the torque limiting cap (9; 19; 19') is adapted to be destructed at the recess (193) by the screw driver when the torque applied by a screw driver to the cap (9; 19; 19') exceeds a predetermined value so as to limit the torque to be applied to the screw (7; 17).

2. Tightening screw according to claim 1, wherein the recess (171) in the screw head is a socket, preferably a hexagonal (hex) socket.

3. Tightening screw according to claim 1, wherein the recess (193) in the cap has a cruciform shape.

4. Tightening screw according to any one of the claims 1 - 3, wherein the torque limiting cap (9; 19; 19') comprises a dome (191) that receives the screw head (7A; 17A).

5. Tightening screw according to claim 4, wherein the cap comprises an extension part (192; 192') on top of the dome (191), wherein the recess (193), which is able to mate with the screw driver, is arranged in said extension part (192; 192').

6. Tightening screw according to claim 4 or 5, wherein the peripheral surface of the extension part (192) has a cylindrical shape.

7. Tightening screw according to claim 4 or 5, wherein the peripheral surface of the extension part (192') has a hexagonal shape.

8. Method for manufacturing tightening screws (7; 17) of the type according to any one of the claims 1-7, wherein the plastic caps (9; 19; 19') are formed by injection moulding, wherein at least two types of plastic caps (9; 19; 19') are produced, each type having the same shape but having a different torque limit by selecting for each type a different plastic resin blend to form the cap (9; 19; 19') from.

## Patentansprüche

1. Metallspannschraube (7; 17) mit einem Schraubenkopf (7A; 17A) und einem Schraubenschaft (7B; 17B), wobei der Schraubenschaft (7B; 17B) mit einem Außengewinde versehen ist, das dazu eingerichtet ist, mit einem weiblichen Befestigungsmittel zusammenzuwirken, wobei eine Drehmomentbegrenzungskappe (9; 19; 19') auf dem Schraubenkopf (7A; 17A) angeordnet ist, wobei die Drehmomentbegrenzungskappe (9; 19; 19') mindestens eine Drehmomentübertragungseinrichtung aufweist, die die Kappe (9; 19; 19') mit dem Schraubenkopf (7A; 17A) in einer Drehrichtung verbindet, **dadurch gekennzeichnet, dass**
die Drehmomentbegrenzungskappe (9; 19; 19') aus Kunststoff besteht, wobei die Drehmomentübertragungseinrichtung eine Vertiefung (171) in dem Kopf (7A; 17A) der Schraube und einen Vorsprung (192) auf der Kappe (9; 19; 19') aufweist, der mit der Vertiefung (171) zusammenpasst, so dass ein Drehmoment von der Drehmomentbegrenzungskappe (9; 19; 19') auf den Schraubenkopf (7A; 17A) übertragen werden kann, **und dass** die Drehmomentbegrenzungskappe (9; 19; 19') an einer Außenseite eine Vertiefung (193) aufweist, die mit einem Schraubendreher zusammenpassen kann, wobei die Drehmomentbegrenzungskappe (9; 19; 19') dazu eingerichtet ist, an der Vertiefung (193) durch den Schraubendreher zerstört zu werden, wenn das Drehmoment, das von einem Schraubendreher auf die Kappe (9; 19; 19') ausgeübt wird, einen vorherbestimmten Wert überschreitet, um so das Drehmoment zu begrenzen, das auf die Schraube (7; 17) auszuüben ist.

2. Spannschraube nach Anspruch 1, wobei die Vertiefung (171) in dem Schraubenkopf eine Buchse, vorzugsweise eine Sechskantbuchse (Sechskant), ist.

3. Spannschraube nach Anspruch 1, wobei die Vertiefung (193) in der Kappe eine kreuzförmige Gestalt aufweist.

4. Spannschraube nach einem der Ansprüche 1 bis 3, wobei die Drehmomentbegrenzungskappe (9; 19; 19') eine Kuppel (191) umfasst, die den Schraubenkopf (7A; 17A) aufnimmt.

5. Spannschraube nach Anspruch 4, wobei die Kappe einen Erweiterungsabschnitt (192; 192') oben auf der Kuppel (191) umfasst, wobei die Vertiefung (193), die mit dem Schraubendreher zusammenpassen kann, in dem Erweiterungsabschnitt (192; 192') angeordnet ist.

6. Spannschraube nach Anspruch 4 oder 5, wobei die Umfangsfläche des Erweiterungsabschnitts (192) eine zylindrische Form aufweist.

7. Spannschraube nach Anspruch 4 oder 5, wobei die Umfangsfläche des Erweiterungsabschnitts (192') eine Sechskantform aufweist.

8. Verfahren zur Herstellung von Spannschrauben (7; 17) des Typs nach einem der Ansprüche 1 bis 7, wobei die Kunststoffkappen (9; 19; 19') durch Spritzgießen gebildet werden, wobei mindestens zwei Typen von Kunststoffkappen (9; 19; 19') hergestellt werden, wobei jeder Typ dieselbe Form aufweist, jedoch eine andere Drehmomentgrenze aufweist, indem für jeden Typ eine andere Kunststoff-Harz-Mischung ausgewählt wird, um die Kappe (9; 19; 19') daraus zu bilden.

## Revendications

1. Vis de serrage (7 ; 17) métallique ayant une tête de vis (7A ; 17A) et une tige de vis (7B ; 17B), ladite tige de vis (7B ; 17B) étant pourvue d'un filetage mâle adapté pour coopérer avec un moyen de fixation femelle, dans laquelle un capuchon de limitation de couple (9 ; 19 ; 19') est disposé sur la tête de vis (7A ; 17A), ledit capuchon de limitation de couple (9 ; 19 ; 19') comprenant au moins une caractéristique de transfert de couple qui relie le capuchon (9 ; 19 ; 19') à la tête de vis (7A ; 17A) dans une direction de rotation, **caractérisée en ce que**
le capuchon de limitation de couple (9 ; 19 ; 19') est fait de plastique, dans lequel la caractéristique de transfert de couple comprend un évidement (171) dans la tête (7A ; 17A) de la vis et une saillie (192) sur le capuchon (9 ; 19 ; 19') qui s'adapte à l'évidement (171) de sorte qu'un couple peut être transféré du capuchon de limitation de couple (9 ; 19 ; 19') à la tête de vis (7A ; 17A), et **en ce que** le capuchon de limitation de couple (9 ; 19 ; 19') présente sur un côté extérieur un évidement (193) qui est capable de s'accoupler à un tournevis, dans lequel le capuchon de limitation de couple (9 ; 19 ; 19') est adapté pour être détruit au niveau de l'évidement (193) par le tournevis lorsque le couple appliqué par un tournevis au capuchon (9 ; 19 ; 19') dépasse une valeur prédéterminée de manière à limiter le couple à appliquer à la vis (7 ; 17).

2. Vis de serrage selon la revendication 1, dans laquelle l'évidement (171) de la tête de vis est une douille, de préférence une douille hexagonale (hex).

3. Vis de serrage selon la revendication 1, dans laquelle l'évidement (193) du capuchon a une forme cruciforme.

4. Vis de serrage selon l'une quelconque des revendications 1 à 3, dans laquelle le capuchon de limitation de couple (9 ; 19 ; 19') comprend un dôme (191) qui reçoit la tête de vis (7A ; 17A).

5. Vis de serrage selon la revendication 4, dans laquelle le capuchon comprend une partie d'extension (192 ; 192') sur le dessus du dôme (191), dans laquelle l'évidement (193), qui est capable de s'accoupler avec le tournevis, est disposé dans ladite partie d'extension (192 ; 192').

6. Vis de serrage selon la revendication 4 ou 5, dans laquelle la surface périphérique de la partie d'extension (192) a une forme cylindrique.

7. Vis de serrage selon la revendication 4 ou 5, dans laquelle la surface périphérique de la partie d'extension (192') a une forme hexagonale.

8. Procédé de fabrication de vis de serrage (7 ; 17) du type selon l'une quelconque des revendications 1 à 7, dans lequel les capuchons (9 ; 19 ; 19') en plastique sont formés par moulage par injection, dans lequel au moins deux types de capuchons (9 ; 19 ; 19') en plastique sont produits, chaque type ayant la même forme mais ayant une limite de couple différente en sélectionnant pour chaque type un mélange de résine plastique différent à partir duquel est formé le capuchon (9 ; 19 ; 19').
